Europäisches Patentamt

European Patent Office

Office européen des brevets

(19)

(11) Veröffentlichungsnummer: **0 168 027**

**A2**

(12) # EUROPÄISCHE PATENTANMELDUNG

(21) Anmeldenummer: 85108508.4

(22) Anmeldetag: 09.07.85

(51) Int. Cl.⁴: **A 21 C 15/00**
**A 23 G 3/28**

(30) Priorität: 11.07.84 DE 3425471

(43) Veröffentlichungstag der Anmeldung:
15.01.86 Patentblatt 86/3

(84) Benannte Vertragsstaaten:
AT BE CH FR GB IT LI LU NL SE

(71) Anmelder: Girrbach, Richard
Hardtstrasse 19-21
D-7261 Oberreichenbach-3(DE)

(72) Erfinder: Girrbach, Richard
Hardtstrasse 19-21
D-7261 Oberreichenbach-3(DE)

(74) Vertreter: Frank, Gerhard, Dipl.-Phys. et al,
Patentanwälte Dr. F. Mayer & G. Frank Westliche 24
D-7530 Pforzheim(DE)

(54) Verfahren und Vorrichtung zur Aufbringung von essbaren Dekorelementen auf Nahrungsmitteln.

(57) Zur Aufbringung von eßbaren Dekorelementen auf Nahrungsmitteln sind diese in tiefgezogenen Näpfen einer Kunststoffolie eingesetzt oder eingegossen und zwar derart, daß die Position der Näpfe in der Kunststoffolie der späteren Position der Dekorelemente auf dem Nahrungsmittel entspricht. Dadurch lassen sich eine große Anzahl von Dekorelementen gleichzeitig auf den betreffenden Nahrungsmitteln, beispielsweise eine Torte, aufsetzen und die Kunststoffolie kann nach dem Tieffrieren des Nahrungsmittels ohne Schwierigkeiten von den auf dem Nahrungsmittel haftenden Dekorelementen abgezogen werden.

FIG.4

EP 0 168 027 A2

PATENTANWÄLTE
DR. FRIEDRICH E. MAYER
DIPL.-PHYS. G. FRANK
WESTLICHE 24
7530 PFORZHEIM

0168027

Richard  G i r r b a c h , · Hardtstr. 19-21, 7261 Oberreichenbach 3

Verfahren und Vorrichtung zur Aufbringung von eßbaren Dekorelementen auf Nahrungsmitteln

Die Erfindung betrifft zunächst eine Vorrichtung zur Aufbringung von eßbaren Dekorelementen auf  Nahrungsmitteln, insbesondere Torten, bestehend aus einer Kunststoffolie mit mehreren tiefgezogenen Näpfen, in die die Dekorelemente eingesetzt oder eingegossen sind.

Eine derartige Kunststoffolie mit tiefgezogenen Näpfen ist ein bekanntes Hilfsmittel um beispielsweise Zierelemente aus Schokolade auf Torten oder Gebäckstücken anzubringen. Meist sind in einer Kunststoffolie mehrere tiefgezogene Näpfe verschiedener Form mit verschiedenem Dekor angebracht und der Konditor oder verarbeitende Betrieb drückt dann die einzelnen Dekorelemente der gewünschten Form aus den Näpfen auf den gewünschten Platz auf dem  Nahrungsmittel. Wenn alle Dekorelemente aufgebraucht sind, kann die Kunststoffolie weggeworfen werden.

Ausgehend von einer derartigen bekannten Kunststoffolie stellt sich die Erfindung zur Aufgabe, diese Vorrichtung so weiterzubilden, daß damit eine rationelle Dekorierung von Nahrungsmitteln insbesondere Torten, mit Dekorelementen möglich wird.

Diese Aufgabe wird erfindungsgemäß dadurch gelöst, daß die Position der Näpfe in der Kunststoffolie der späteren Position der Dekorelemente auf dem  Nahrungsmittel  entspricht.

Der Erfindungsgedanke besteht also im wesentlichen darin, die Kunststoffolie nicht nur als Aufbewahrungsform für die Dekorelemente einzusetzen, sondern darüberhinaus als Hilfsmittel bei der Aufbringung auf das jeweilige Nahrungsmittel.

Das erfindungsgemäße Verfahren zu dieser Aufbringung sieht vor, daß die Kunststoffolie mit den Dekorelementen auf das Nahrungsmittel aufgelegt wird, dieser tiefgefroren wird, und danach die Kunststoffolie von den auf dem Nahrungsmittel haftenden Dekorelementen abgezogen wird.

Es hat sich herausgestellt, daß die Dekorelemente, insbesondere wenn sie fetthaltig sind, beispielsweise auf einer mit einer Sahneschicht versehenen Torte durch den Tiefgefrierprozess derart fest haften bleiben, daß danach die Kunststoffolie mit einem Handgriff von sämtlichen Dekorelementen abgezogen werden kann und sich dabei die Dekorelemente ohne Schwierigkeit aus den Näpfen der Kunststoffolie lösen, da die Haftkraft auf der Torte größer ist als die Haftkraft in den Näpfen.

Im Unterschied zu bekannten Verfahren, bei dem die gewünschten Dekorelemente einzeln an ihren jeweiligen Platz auf einer Torte angeordnet werden müssen, kann dies nun mit einem Handgriff bewerkstelligt werden, indem einfach die Folie mit allen Dekorelementen auf die Torte oder einen anderen Konditoreiartikel aufgelegt wird, dieser tiefgefroren wird und danach die Folie mit einem Handgriff abgezogen wird.

Für die industrielle Herstellung von Nahrungsmitteln bedeutet dies eine wesentliche Rationalisierung und Kosteneinsparung.

Einen weiteren Rationalisierungseffekt kann man gemäß einer Weiterbildung der Erfindung dadurch erreichen, daß die Kunststoffolie einen Teil der Verpackung des Nahrungsmittels bildet.

In diesem Falle könnte die Kunststoffolie zusammen mit einer Randumhüllung eingesetzt werden und müßte dann vom Endverbraucher vor dem Auftauen mit dem Rest der Verpackung entfernt werden.

Ein Ausführungsbeispiel der Erfindung wird anhand von Zeichnungen näher erläutert, es zeigen:

Figur 1:     Eine Aufsicht auf die Kunststoffolie mit den tiefgezogenen Näpfen,

Figur 2:     einen Schnitt durch die Kunststoffolie nach Fig.1 entlang der Linie II-II,

Figur 3:     die auf eine Torte aufgelegte Kunststoffolie mit den eingebrachten Dekorelementen, und

Figur 4:     das Abziehen der Kunststoffolie von den auf der Torte haftenden Dekorelementen.

Beim dargestellten Ausführungsbeispiel ist die Kunststoffolie 10 kreisförmig ausgebildet, im Randbereich dieses Kreises sind 16 tiefgezogene Näpfe 11 ausgebildet, deren Form die Negativform des späteren Dekorelementes vorgibt. In diese Näpfe 11 ist in bekannter Art und Weise das Dekorelement 12 eingebracht, beispielsweise durch Eingießen von Schokolade. Die Unterseite der Folie 10 ist nach dem Eingießen der Dekorelemente dann im wesentlichen plan eben.

Erfindungswesentlich ist, daß die Position der Näpfe 11 in der Kunststoffolie 10 der späteren Position der Dekorelemente 12 auf dem Nahrungsmittel entspricht, im dargestellten Ausführungsbeispiel auf einer Torte 20. Dementsprechend sind die 16 Näpfe 11 ringförmig in der Kunststoffolie 10 angeordnet.

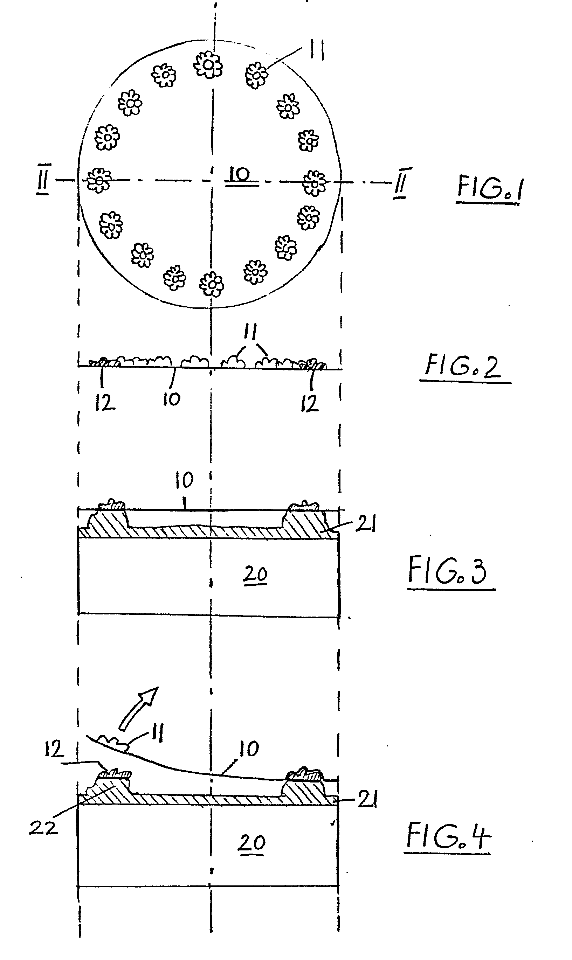

In Figur 3 und 4 ist eine Torte 20 dargestellt, auf deren Oberseite eine Sahneschicht 21 aufgebracht ist. Diese Sahneschicht 21 bildet ihrerseits bereits einen Teil des späteren Dekors, insbesondere sind Erhebungen 22 vorgesehen, deren Position auf der Tortenoberseite der Position der Näpfe 11 auf der Kunststofffolie 10 entspricht.

Zum Aufbringen der Dekorelemente 12 in den Näpfen 11 auf diese Torte 20 wird wie folgt vorgegangen:

Zunächst wird die Kunststoffolie 10 mit den Dekorelementen 12 koaxial auf die Torte 20 aufgesetzt, so daß die Näpfe 11 mit den Dekorelementen 12 jeweils auf einer Erhebung 22 der Sahneschicht 21 zu liegen kommen (Figur 3).

Danach wird die Torte beim Hersteller dem bekannten Tiefgefrierprozess unterworfen, es hat sich herausgestellt, daß hierbei offensichtlich zwischen den Dekorelementen 12 und den Erhebungen 22, auf denen diese aufsitzen, eine Haftschicht herausbildet, die derart fest ist, daß nach dem Einfrieren der Torte 20 die Kunststoffolie 10 als Ganzes von der Sahneschicht 21 abgezogen werden kann und dabei die Dekorelemente 12 sich aus den Näpfen 11 lösen und auf den Erhebungen 22 haften bleiben. Die Erfahrung zeigt, daß dies besonders gut funktioniert, wenn die Dekorelemente fetthaltig sind, also beispielsweise aus Schokolade und die Schicht 21 eine Sahneschicht ist.

Die industrielle Herstellung von Konditoreiartikeln wird durch dieses Verfahren sehr erleichtert, das sich ohne Schwierigkeiten auch auf andere Konditoreierzeugnisse als Torten anwenden läßt. Immer ist der Grundgedanke der, daß mit der Kunststoffolie 10 bereits die spätere räumliche relative Zuordnung der Dekorelemente auf dem Konditoreiartikel vorgegeben wird. Diese Maßnahme gestattet die "kollektive" Verarbeitung mehrerer Dekorelemente auf einem Konditoreiartikel.

Der Anwendungsbereich der erfindungsgemäßen Vorrichtung erstreckt sich praktisch auf alle Nahrungsmittel, die mit Dekorelementen versehen werden sollen, beispielsweise auch Eistorten oder auch Pasteten und ähnliches.

Patentansprüche

1. Vorrichtung zur Aufbringung von eßbaren Dekorelementen auf Nahrungsmitteln insbesondere Torten, bestehend aus einer Kunststoffolie mit mehreren tiefgezogenen Näpfen, in die die Dekorelemente eingesetzt oder eingegossen sind, dadurch gekennzeichnet, daß die Position der Näpfe (11) in der Kunststoffolie (10) der späteren Position der Dekorelemente (12) auf dem Nahrungsmittel entspricht.

2. Vorrichtung nach Anspruch 1, dadurch gekennzeichnet, daß 16 bis 20 Näpfe (11) ringförmig angeordnet sind und daß das Nahrungsmittel eine Torte (20) ist.

3. Vorrichtung nach Anspruch 1 und 2, dadurch gekennzeichnet, daß die Dekorelemente (12) Fett enthalten.

4. Vorrichtung nach Anspruch 3, dadurch gekennzeichnet, daß die Dekorelemente (12) aus Schokolade sind.

5. Vorrichtung nach Anspruch 1, dadurch gekennzeichnet, daß die Kunststoffolie (10) einen Teil der Verpackung des Nahrungsmittels bildet.

6. Verfahren zur Herstellung von Nahrungsmitteln unter Verwendung einer Kunststoffolie, nach Anspruch 1, dadurch gekennzeichnet, daß die Kunststoffolie (10) mit den Dekorelementen (12) auf das Nahrungsmittel aufgelegt wird, dieser tiefgefroren wird, und danach die Kunststoffolie (10) von den auf dem Nahrungsmittel haftenden Dekorelementen (12) abgezogen wird.

0168027

1|1

11

II — 10 — II    FIG.1

11

FIG.2

12    10    12

10

21

20    FIG.3

12    11    10

22    21

20    FIG.4